# EUROPÄISCHE PATENTANMELDUNG

(11) **EP 4 847 186 A1**
(43) Veröffentlichungstag der Anmeldung: **02.12.2026**
(21) Anmeldenummer: 26176273.6
(22) Anmeldetag: 04.05.2026
(51) Int. Cl.: B23K 26/323, B23K 1/005

(54) **VERFAHREN ZUM FORMSCHLÜSSIGEN FÜGEN ZWEIER FÜGEPARTNER UND FÜGEPARTNERANORDNUNG**

(30) Priorität: 23.05.2025 DE 102025120177
(71) Anmelder: Robert Bosch GmbH, 70442 Stuttgart (DE)
(72) Erfinder: Wagner, Jonas, 71254 Ditzingen (DE); Stritt, Peter, 71229 Leonberg (DE); Ilin, Alexander, 71642 Ludwigsburg (DE); Dais, Adina Kerstin, 75365 Calw (DE); Kesel, Ingo, 71665 Vaihingen (DE)

(57) **Zusammenfassung**

Die Erfindung betrifft ein Verfahren zum formschlüssigen Fügen wenigstens zweier, insbesondere nicht stoffschlüssig verbindbarer, Fügepartner 2,3, wobei die wenigstens zwei Fügepartner 2,3 in einem Formschlussfügebereich 4 aneinander angeordnet werden, wobei ein Material von einem der Fügepartner 2,3 durch einen Wärmeeintrag mittels eines Laserstrahlverfahrens aufgeschmolzen wird, wobei durch das Aufschmelzen Schmelzerhebungen aus dem aufgeschmolzenen Material heraus erzeugt werden, wobei die Schmelzerhebungen nach dem Abkühlen des aufgeschmolzenen Materials als Materialüberstände 5 vorliegen und die Fügepartner 2,3 durch die Materialüberstände 5 in dem Formschlussfügebereich 4 formschlüssig miteinander gefügt werden. Ferner betrifft die Erfindung auch eine durch das Verfahren hergestellte Fügepartneranordnung 1.

## Beschreibung

Die Erfindung betrifft ein Verfahren zum formschlüssigen Fügen wenigstens zweier Fügepartner mittels eine Laserstrahlverfahren ohne die Verwendung eines Zusatzwerkstoffes.

### Stand der Technik

Die nachveröffentlichte Druckschrift DE 10 2023 211 662 beschreibt ein Verfahren zum formschlüssigen Fügen zweier Komponenten. Hierbei werden die Komponenten zumindest in einem jeweiligen Fügebereich aneinander oder ineinander angeordnet, wobei eine der Komponenten in ihrem Fügebereich mittels Laserstrahl derart angeschmolzen wird, dass durch plastische Verformung geschmolzenes Material der Komponente um einen Vorsprung der anderen Komponente herum, von einem Vorsprung der Komponente auf die andere Komponente herauf und/oder in eine Aussparung der anderen Komponente hinein fließt und dadurch die Komponenten formschlüssig miteinander verbunden werden.

### Offenbarung der Erfindung

Gegenstand der Erfindung ist ein Verfahren zum formschlüssigen Fügen wenigstens zweier, insbesondere nicht stoffschlüssig verbindbarer Fügepartner mit den Merkmalen des Anspruchs 1 und eine Fügepartneranordnung mit den Merkmalen des Anspruchs 12.

Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist ein Verfahren zum formschlüssigen Fügen wenigstens zweier, insbesondere nicht stoffschlüssig bzw. materialschlüssig verbindbarer, Fügepartner. Insbesondere dient das Verfahren dazu, wenigstens zwei Fügepartner, welche nicht miteinander verschweißt werden können, formschlüssig zu Fügen.

Hierbei ist es vorgesehen, dass die wenigstens zwei Fügepartner in einem Formschlussfügebereich aneinander angeordnet werden. Insbesondere werden die Fügepartner in direktem Kontakt zueinander, insbesondere spielfrei, oder in einem bestimmten Abstand zueinander, insbesondere einem Abstand entsprechend eines Spiels oder einer Toleranz, aneinander angeordnet. Die Fügepartner können dabei, zumindest in dem Formschlussfügebereich, die gleichen oder unterschiedliche Geometrien aufweisen. Die Fügepartner werden dabei so aneinander angeordnet, dass die beiden Fügepartner jeweils eine Relativbewegung des jeweils anderen Fügepartners in zumindest eine Richtung verhindern. Insbesondere könne die Fügepartner auch ineinander angeordnet werden, wobei die Fügepartner dabei bevorzugt eine jeweils zumindest abschnittsweise zueinander korrespondiere Geometrie aufweisen.

Der Formschlussfügebereich ist dabei der Bereich in dem im weiteren Verlauf des Verfahrens ein Formschluss zwischen den wenigstens zwei Fügepartnern hergestellt wird. Der Formschlussfügebereich erstreckt sich dabei über jeweils wenigstens einen Abschnitt der beiden Fügepartner.

Im weiteren Verlauf des Verfahrens ist es vorgesehen, dass ein Material von einem der Fügepartner durch einen Wärmeeintrag mittels eines Laserstrahlverfahrens aufgeschmolzen wird. Hierbei wird wenigstens ein Laserstrahl erzeugt. Der Laserstrahl wird dabei insbesondere durch ein Laserschweißgerät erzeugt. Dabei ist es vorgesehen ein Laserschweißverfahren ohne Zusatzmaterial, z.B. in Form eines Drahtes oder eines Pulvers, einzusetzen.

Der Laserstrahl trifft dabei auf einem Oberflächenbereich des wenigstens einen Fügepartners, bei welchem das Material aufgeschmolzen werden soll, auf. Durch die Energie des Laserstrahls, findet dabei der Wärmeeintrag von der angestrahlten Oberfläche in das Material statt. Die Intensität bzw. die Energie des Laserstrahls ist dabei so gewählt, dass ein ausreichend hoher Wärmeeintrag in das Material erzeugt wird, so dass dieses aufschmilzt. Insbesondere wird das Material im Bereich des Auftreffpunktes des Lasers, auf eine Schmelztemperatur oder eine Temperatur größer als die Schmelztemperatur des Materials erhitzt, insbesondere durch Wärmeleitungsschweißen oder Tiefschweißen.

Verfahrensgemäß ist es vorgesehen eine Relativbewegung zwischen dem Laserstrahl und dem Fügepartner, bei welchem das Material aufgeschmolzen werden soll, zu erzeugen. Insbesondere ist es vorgesehen, dass der Winkel des Laserstrahl, bezogen auf den Oberflächenbereich welcher aufgeschmolzen wird, verändert und/oder der Auftreffpunkt bzw. Auftreffbereich des Laserstrahls auf dem Oberflächenbereich, verändert wird. Beispielsweise kann hierbei der Laserstrahl bewegt bzw. verfahren werden. Insbesondere kann der Laserstrahl senkrecht zur Oberfläche oder in einem Winkel zur Oberfläche ausgerichtet werden.

Dabei ist zumindest der Fügepartner bei dem der Wärmeeintrag erfolgen soll, zumindest abschnittsweise in dem Abschnitt bzw. Bereich in dem der Wärmeeintrag stattfindet bzw. der Laserstrahl auf das Material trifft, aus einem schmelzbaren Material ausgebildet.

Insbesondere ist es vorgesehen, dass nur das Material eines der Fügepartner aufschmilzt. Das Material des anderen Fügepartners welches sich in der Nähe des aufgeschmolzenen Materials befindet oder sich, bedingt durch den einen physischen Kontakt der beiden Fügepartner, in der Nähe des aufgeschmolzenen Materials befindet, nicht aufschmilzt.

Verfahrensgemäß werden durch das Aufschmelzen des Materials Schmelzerhebungen aus dem aufgeschmolzenen Material heraus erzeugt. Die Schmelzerhebungen bilden sich oder werden dabei aus dem aufgeschmolzenen Material gebildet bzw. erzeugt. Die Schmelzerhebungen werden dabei so erzeugt, dass sie sich aus dem aufgeschmolzenen Material bzw. dem schmelzflüssigen Material heraus erheben. Die Schmelzerhebung ist dabei zumindest ein Anteil an dem Volumen des schmelzflüssigen Materials, welches sich über das Höhenniveau der Oberfläche, auf welche der Laserstrahl auftrifft, erstreckt.

Die Schmelzerhebungen werden insbesondere so erzeugt, dass sich diese jeweils aus einem Volumenrückgang eines Teilbereichs des aufgeschmolzenen Materials bilden. Mit anderen Worten bedeutet dies, dass ein Volumenrückgang bzw. eine Volumenabnahme eines Teils des Schmelzvolumens erzeugt wird bzw. sich bildet, während ein Volumenüberstand bzw. eine Volumenzunahme aus dem Volumenrückgang in Form einer Schmelzerhebung gebildet wird bzw. sich bildet. Anders gesagt wird hierbei Schmelze von einem Teilbereich des aufgeschmolzenen Bereichs in einen anderen Teilbereich des aufgeschmolzenen Bereichs oder eines zuvor aufgeschmolzenen Bereichs, welcher insbesondere bereits eine geringere Temperatur als der schmelzflüssige Bereich aufweist, umgelagert.

Im weiteren Verlauf des Verfahrens liegen die Schmelzerhebungen nach dem Abkühlen, insbesondere nach dem Erstarren des aufgeschmolzenen Materials bzw. der Schmelzerhebungen, als Materialüberstände über die Grundkontur bzw. über das Höhenniveau der Oberfläche, auf die der Laserstrahl zum aufschmelzen des Materials trifft, vor. Mit anderen Worten bedeutet dies, dass die Materialüberstände durch das Abkühlen des aufgeschmolzenen Materials bzw. durch das Abkühlen der Schmelzerhebungen gebildet werden. Aufgeschmolzenes Material bzw. die Schmelzerhebungen können dabei auch aktiv abgekühlt werden, beispielsweise durch einen Luftstrom. Insbesondere ist es vorgesehen mehrere, bevorzugt eine Vielzahl von Schmelzerhebungen zu erzeugen. Die Schmelzerhebungen werden dabei bevorzugt in einem Abstand von 1 bis 5 mm zwischen zwei jeweiligen Schmelzerhebungen erzeugt.

Insbesondere wird das Material eines der Fügepartner so aufgeschmolzen, dass das aufgeschmolzene Material nach dem Abkühlen, als eine Art Schweißnaht vorliegt, wobei die Materialüberstände entlang der Schweißnaht angeordnet sind und die Materialüberstände jeweils in Abständen zueinander angeordnet sind. Insbesondere ist es auch möglich eine nicht durchgängige Schweißnaht zu erzeugen. Mit anderen Worten bedeutet das, dass beispielsweise der Wärmeeintrag und/oder der Laserstrahl beim Bewegen des Lasers und/oder des Fügepartners unterbrochen wird, so dass mehrere Bereiche auf dem Fügepartner erzeugt werden welche die Materialüberstände aufweisen, beispielsweise in Form einer unterbrochenen Schweißnaht oder mehreren Schweißnähten.

Die wenigstens zwei Fügepartner werden dabei durch die Materialüberstände in dem Formschlussfügebereich formschlüssig miteinander gefügt. Die Materialüberstände sind dabei an einem Abschnitt eines der Fügepartner im Formschlussfügebereich angeordnet. Die Materialüberstände liegen insbesondere als Geometrieänderung des Abschnitts vor und dienen dazu einen Abschnitt des anderen Fügepartners, wobei dieser Abschnitt im Formschlussfügebereich liegt, formschlüssig zu fügen. Durch die Materialüberstände auf einem der Fügepartner, wird eine Relativbewegung zwischen den Fügepartnern in zumindest eine Richtung verhindert.

Hierbei ergibt sich der Vorteil, dass die Fügepartner, insbesondere der Fügepartner auf welchem die Materialüberstände erzeugt werden, keine spezielle Geometrie aufweisen müssen bzw. keine spezielle Geometrie vorbereitet werden muss, um eine formschlüssige Verbindung zwischen den beiden Fügepartnern auszubilden. Des Weiteren können durch das Verfahren zwei Fügepartner, welche sich nicht stoffschlüssig bzw. materialschlüssig verbinden lassen, z.B. durch Verschweißen, formschlüssig miteinander gefügt werden. Ferner wird das Material eines der Fügepartner genutzt um die Materialüberstände auszubilden, wobei kein Zusatzmaterial verwendet werden muss, wodurch Kosten gespart werden können.

Das Verfahren ist bevorzugt so gestaltet, dass die Schmelzerhebungen in regelmäßigen, insbesondere in zeitlich und/oder räumlich regelmäßigen, Abständen gebildet werden. Hierbei ist es vorgesehen, die Schmelzerhebungen jeweils in, im Wesentlichen, den gleichen Abständen zu erzeugen. Insbesondere werden die Schmelzerhebungen in einem zusammenhängenden Schmelzbereich in regelmäßigen Abständen erzeugt, wobei der zusammenhängende Schmelzbereich der Bereich ist welcher durch den Laser aufgeschmolzen wird oder wurde. Beispielsweise kann der Schmelzbereich nach Art einer zusammenhängenden Schweißnaht ausgebildet sein oder werden.

Besonders bevorzugt werden die Schmelzerhebungen nach Art des Humping-Effekts bzw. durch das Auftreten des Humping-Effekts, insbesondere nach Art des Humping-Effekts so wie dieser beim Laserschweißen auftritt, erzeugt.

Der Humping-Effekt beim Laserschweißen beschreibt insbesondere einen Defekt einer Schweißnaht. Hierbei entstehen entlang der Schweißnaht periodische bzw. regelmäßige Erhebungen, auch "Humps" bzw. "Hügel" genannt, aus dem aufgeschmolzenen Material. Hierbei gibt es verschiedene bzw. unterschiedliche Theorien, welche das Auftreten des Humping-Effekts bzw. die Ursache des Humping-Effekts beschreiben. Beispielsweise kann der Humping-Effekt auftreten, wenn ein Laser mit einer bestimmten Verfahrgeschwindigkeit, insbesondere einer Verfahrgeschwindigkeit, welche größer ist als eine bestimmte Grenzgeschwindigkeit, über eine Oberfläche geführt wird. Insbesondere kann auch das zu bearbeitende Material und/oder die Form bzw. Geometrie und/oder Intensitätsverteilung des Laserstrahls zum Auftreten des Humping-Effekts führen oder zumindest beitragen.

Bevorzugt werden die Schmelzerhebungen bzw. die Materialüberstände gemäß dem Humping-Effekt erzeugt, wobei das Auftreten des Humping-Effekts gezielt und gesteuert eingesetzt wird. Der Bereich bzw. der Abschnitt des Fügepartners, in welchem die Materialüberstände aus den Schmelzerhebungen gebildet werden, liegt insbesondere nach der Bildung der Materialüberstände als eine Art Schweißnaht, insbesondere Laserschweißnaht vor, wobei die Materialüberstände in regelmäßigen Abständen zueinander, entlang der Schweißnaht gebildet sind. Die Materialüberstände werden insbesondere so gebildet, dass sich jeweils eine Vertiefung und ein jeweiliger Materialüberstand abwechseln. Die Vertiefungen werden dabei gebildet aus bzw. bilden sich aus einem Volumenrückgang, so wie dieser bereits zuvor beschrieben wurde, des aufgeschmolzenen Materials. Hierdurch ergibt sich der Vorteil, dass durch die in regelmäßigen Abständen angeordneten Materialüberstände, eine homogene Kraftverteilung bei einem Formschluss der beiden Fügepartner erzielt werden kann. Ferner ergibt sich der Vorteil, dass der Humping-Effekt, welcher bisher als Defekt angesehen wurde, gezielt genutzt werden kann.

In einer bevorzugten Ausgestaltung des Verfahrens, ist es vorgesehen, dass sich aus den Schmelzerhebungen Materialüberstände mit jeweils einer zumindest abschnittsweisen als Kugelabschnitt oder Ellipsoidabschnitt ausgebildeten Geometrie bilden oder diese Materialüberstände aus den Schmelzerhebungen gebildet werden. Dabei ist es insbesondere vorgesehen, dass sich jeweils ein einzelner Materialüberstand aus jeweils einer einzelnen Schmelzerhebung bildet oder aus dieser gebildet wird. Die Materialüberstände bilden sich oder werden gebildet aus den Schmelzerhebungen, so wie dies gemäß der Erstarrung eines schmelzflüssigen Materials, insbesondere einer Metallschmelze erfolgt. Die Materialüberstände sind jeweils insbesondere als verrundete Erhebungen ausgebildet. Beispielsweise können die Materialüberstände jeweils zumindest Abschnittsweise als Halbkugel oder Abschnitt bzw. Teil eines Ellipsoids ausgebildet sein.

Eine mögliche Ausgestaltung sieht vor, dass wenigstens einer der Fügepartner einen Vorsprung aufweist, wobei der andere Fügepartner an dem Vorsprung, insbesondere in dem Vorsprung angeordnet wird. Bevorzugt wird einer der Fügepartner so an und/oder in dem Vorsprung angeordnet, dass dieser nur noch in eine Richtung verschiebbar in bzw. an und/oder in dem Vorsprung gelagert bzw. angeordnet ist, wobei die Materialüberstände so gebildet bzw. erzeugt werden oder sind, dass ein Verschieben in diese Richtung, durch den durch die Materialüberstände erzeugten Formschluss, verhindert wird oder ist. Der Vorsprung kann dabei in dem Formschlussfügebereich und/oder abseits des Formschlussfügebereichs angeordnet sein. Die Geometrie des anderen Fügepartners kann dabei, zumindest abschnittsweise, an die Geometrie den Vorsprung angepasst sein. Hierbei ergibt sich der Vorteil, dass ein zusätzlicher Formschluss erzeugt werden kann, welcher als Sicherung gegen ein Verdrehen und/oder ein Verschieben der Fügepartner gegeneinander genutzt werden kann. Insbesondere kann hierdurch die Prozessgenauigkeit gesteigert werden.

In einer alternativen oder ergänzenden Ausgestaltung, ist es vorgesehen, dass wenigstens einer der Fügepartner eine Aussparung aufweist, wobei der andere Fügepartner in der Aussparung angeordnet wird. Bevorzugt wird der andere Fügepartner so in Aussparung angeordnet, dass dieser nur noch in eine Richtung verschiebbar in der Aussparung gelagert bzw. angeordnet ist, wobei die Materialüberstände so erzeugt werden oder sind, dass das Verschieben in diese Richtung verhindert wird oder ist. Die Aussparung kann insbesondere in dem Formschlussfügebereich angeordnet sein und/oder abseits des Formschlussfügebereichs angeordnet sein. Die Geometrie des anderen Fügepartners kann dabei insbesondere an die Geometrie der Aussparung angepasst sein. Insbesondere ist es auch möglich, dass einer der Fügepartner den Vorsprung, so wie dieser bereits beschrieben wurde, aufweist und der andere Fügepartner die Aussparung aufweist, wobei die Geometrie des Vorsprungs an die Geometrie der Aussparung angepasst ist. Hierbei ergibt sich der Vorteil, dass ein zusätzlicher Formschluss erzeugt werden kann, welcher als Sicherung gegen ein Verdrehen und/oder ein Verschieben der Fügepartner gegeneinander genutzt werden kann. Insbesondere kann hierdurch die Prozessgenauigkeit gesteigert werden.

Ein weiteres mögliches Ausführungsbeispiel sieht vor, dass einer der Fügepartner eine Aussparung oder eine Freimachung in dem Formschlussfügebereich aufweist und die Schmelzerhebungen auf dem anderen Fügepartner derart erzeugt werden, dass sich die Schmelzerhebungen in die Aussparung oder Freimachung erstrecken. Hierbei ist es möglich, dass sich nicht alle Schmelzerhebungen, sondern nur ein Teil, also eine bestimmte Anzahl, in die Aussparung erstrecken. Die Aussparung oder die Freimachung kann dabei als Nut ausgebildet sein. Hierbei ist es insbesondere auch möglich, dass die Schmelzerhebungen in der Aussparung erzeugt werden. Hierbei ergibt sich der Vorteil, dass ein bereits durch die gegenseitige Anordnung der Fügepartner erzeugter Formschluss durch einen weiteren, durch die Materialüberstände erzeugten Formschluss, ergänzt werden kann bzw. ein Formschluss durch einen weiteren Formschluss gesichert werden kann.

In einer Konkretisierung ist es vorgesehen, dass die Fügepartner zueinander gleichartige Materialien mit zueinander gleichen Schmelzpunkten aufweisen oder aus diesen ausgebildet sind, wobei einer der Fügepartner bis zu seinem jeweiligen Schmelzpunkt oder darüber hinaus erhitzt wird. Bevorzugt ist das Material der Fügepartner ausgewählt aus einer Gruppe umfassend metallische Werkstoffe, insbesondere Aluminium, Aluminiumlegierungen, Eisen, Eisen-KohlenstoffLegierungen (Stahl), Kupfer, Kupferlegierungen, und Kunststoffe. Insbesondere wird so verfahren, dass das Material eines der Fügepartner im Formschlussfügebereich durch das Laserstrahlverfahren aufgeschmolzen wird um die Schmelzerhebungen zu erzeugen, wobei das Material des anderen Fügepartners nicht aufgeschmolzen wird. Hierbei ergibt sich der Vorteil, trotz einer etwaigen Verschweißbarkeit beider Fügepartner, eine alternative Verbindung in Form des Formschlusses erzeugt werden kann. Ferner ergibt sich auch der Vorteil, durch eine gezielte Laserführung oder einen gezielten Wärmeeintrag nur das Material von einem Fügepartner aufgeschmolzen werden kann.

Alternativ ist es vorgesehen, dass die Fügepartner zueinander unterschiedliche Materialien mit zueinander unterschiedlichen Schmelzpunkten aufweisen oder aus diesen ausgebildet sind, wobei einer der Fügepartner bis zu seinem jeweiligen Schmelzpunkt oder darüber hinaus erhitzt wird. Bevorzugt ist das Material der Fügepartner ausgewählt aus einer Gruppe umfassend metallische Werkstoffe, insbesondere Aluminium, Aluminiumlegierungen, Eisen, Eisen-KohlenstoffLegierungen (Stahl), Kupfer, Kupferlegierungen, und Kunststoffe. Insbesondere wird so verfahren, dass das Material eines der Fügepartner im Formschlussfügebereich durch das Laserstrahlverfahren aufgeschmolzen wird um die Schmelzerhebungen zu erzeugen, wobei das Material des anderen Fügepartners nicht aufgeschmolzen wird. Hierdurch ergibt sich der Vorteil, dass Fügepartner, welche aufgrund ihres jeweiligen Materials nicht stoffschlüssig bzw. materialschlüssig verbindbar sind, formschlüssig verbunden werden können. Ferner ist es durch die Wahl unterschiedlicher Materialien der jeweiligen Fügepartner möglich, einen reinen Formschluss der Fügepartner zu erzielen ohne dass ein Materialschluss durch Verschweißen stattfindet bzw. erzeugt wird.

In einer bevorzugten Ausgestaltung des Verfahrens ist es vorgesehen, dass zumindest das Material im Bereich des Wärmeeintrags mit einem Schutzgas beaufschlagt wird. Hierbei ist es möglich das Verfahren in einer Schutzgasatmosphäre durchzuführen und/oder das Schutzgas aktiv in den Bereich des Wärmeeintrag zuzuführen. Hierbei kann das aufgeschmolzene Material eines der Fügepartner durch ein Anströmen der Schmelze mit einem Schutzgas beaufschlagt werden. Insbesondere kann auch das Material beider Fügepartner in dem Formschlussfügebereich durch ein Schutzgas beaufschlagt werden. Beispielsweise können hierbei gängige Schutzgase, so wie diese bei anderen Schweißverfahren oder speziell beim Laserschweißen verwendet werden, eingesetzt werden. Hierdurch können insbesondere die Eigenschaften des aufgeschmolzenen Materials bzw. der Schmelze positiv beeinfluss werden, wodurch die Prozessgenauigkeit gesteigert werden kann.

Eine Weiterbildung des Verfahrens sieht vor, dass wenigstens einer der Fügepartner während des Wärmeeintrags bewegt, insbesondere gedreht und/oder in eine Vibration versetzt wird. Hierbei ist es insbesondere möglich, dass einer der Fügepartner bewegt wird, während der Laserstrahl in einer festen Position verbleibt. Hierbei wird die Relativbewegung zwischen dem wenigstens einen Fügepartner und dem Laststrahl nur durch die Bewegung des wenigstens einen Fügepartners erzeugt. Alternativ ist es auch möglich, dass sich sowohl wenigstens einer der Fügepartner als auch der Laserstrahl bewegen. Hierbei wird die Relativbewegung zwischen dem wenigstens einen Fügepartner und dem Laserstrahl so erzeugt, dass der Auftreffpunkt des Lasers auf dem wenigstens einen Fügepartner bewegt wird, so dass unterschiedliche Bereich, insbesondere entlang einer Art Schweißnaht, aufgeschmolzen werden. Die Bewegung des wenigstens einen Fügepartners wird dabei insbesondere maschinell bzw. automatisch erzeugt. Hierdurch ergibt sich der Vorteil, dass ein einfaches Laserschweißgerät, bzw. ein einfach gestalteter Laserstrahlerzeuger verwendet werden kann, welcher keine Bewegung des Laserstrahl erzeugen kann, wobei die Bewegung des wenigstens einen Fügepartner durch eine einfache und kostengünstige mechanische Bewegungsvorrichtung erzeugt werden. Alternativ ergibt sich aus der Bewegung des wenigstens einen Fügepartners in Kombination mit der Bewegung des Laserstrahls der Vorteil, dass das Verfahren mehr Flexibilität bietet und/oder die Prozessgenauigkeit gesteigert werden kann.

In einer möglichen Ausgestaltung des Verfahrens ist es möglich, dass Verfahrensparameter, insbesondere auch Verfahrensparameter des Lasterstrahlverfahrens während der Erzeugung der Schmelzerhebungen oder während der Bildung der Materialüberstände durchgängig gleichbleibend sind oder verändert werden. Beispielsweise kann der Laserstrahl mit einer gleichbleibenden Verfahrgeschwindigkeit über die Oberfläche eines der Fügepartner geführt werden. Alternativ oder ergänzend kann auch die Laserstrahlform und/oder die Leistung und Intensitätsverteilung des Laserstrahls gleichbleiben. Alternativ ist es auch möglich, dass die Verfahrgeschwindigkeit, die Verfahrrichtung die Laserstrahlform und/oder die Leistung und/oder Intensitätsverteilung des Lasers während des Verfahrens bzw. während der Erzeugung der Schmelzerhebungen verändert werden. Beispielsweise ist auch eine Strahloszillation, ein sog. "Wobbeln" möglich. Alternativ oder ergänzend kann auch die Bewegung, insbesondere eine Drehrichtung und/oder Drehgeschwindigkeit von einem der Fügepartner während des Verfahrens gleichbleiben oder geändert werden. Insbesondere ist es auch möglich, dass die Bearbeitungslinie des Laserstrahl und/oder eines der Fügepartner linear oder kurvenförmig ist. Eine weitere Alternative oder Ergänzung sieht vor, den Laserstrahl zu defokussieren, beispielsweise durch Adaptierung der Optik oder eine Änderung des Abstands zwischen Optik und der zu bearbeitenden Oberfläche, wobei hierdurch der Strahlendurchmesser auf der Oberfläche und die Intensität bzw. die Intensitätsverteilung verändert werden kann. Hierdurch lässt sich die Entstehung der Materialüberstände, insbesondere die Abstände und weitere Eigenschaften der Materialüberstände beeinflussen.

Ein weiterer Gegenstand der Erfindung ist eine Fügepartneranordnung, mit wenigstens zwei Fügepartnern, insbesondere so wie diese bereits zuvor beschrieben wurden, wobei die wenigstens zwei Fügepartner vorzugsweise durch das Verfahren, so wie dieses bereits zuvor beschrieben wurde, formschlüssig miteinander gefügt sind. Dabei ist die Fügepartneranordnung insbesondere so ausgebildet, dass nur ein Formschluss durch die Materialüberstände, so wie diese bereits zuvor beschrieben wurden, erzeugt ist und kein Stoffschluss bzw. Materialschluss der beiden Fügepartner erzeugt ist. Die Fügepartneranordnung umfasst somit wenigstens zwei Fügepartnern, die in einem Formschlussfügebereich formschlüssig gefügt sind, wobei die Fügepartner durch Materialüberstände in Form von Schmelzerhebungen aus erstarrtem Material in dem Formschlussfügebereich formschlüssig miteinander gefügt sind.

Weitere Merkmale, Vorteile und Wirkung der Erfindung ergeben sich aus der nachfolgenden Beschreibung eines bevorzugten Ausführungsbeispiels der Erfindung sowie der beigefügten Figuren. Diese zeigen:
- Figur 1: einen Teilausschnitt einer Fügepartneranordnung,
- Figur 2: eine Fügepartneranordnung mit Materialüberständen,
- Figur 3: eine Fügepartneranordnung mit zwei Fügepartnern, wobei einer der Fügepartner Materialüberstände aufweist und der andere eine Nut aufweist, wobei sich die Materialüberstände in die Nut erstrecken.

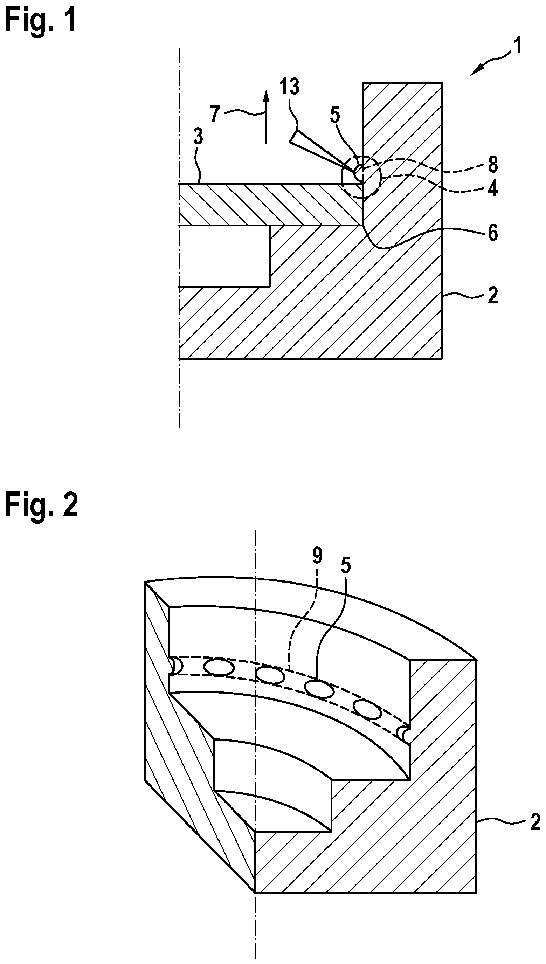

Die Darstellung in Figur 1, zeigt einen Teilausschnitt einer Fügepartneranordnung 1 mit einem Querschnitt durch die Fügepartneranordnung 1. Die Fügepartneranordnung 1 umfasst dabei einen ersten Fügepartner 2 und einen zweiten Fügepartner 3. Die Fügepartneranordnung 1 ist dabei rotationssymmetrisch ausgebildet, wobei die Fügepartner 1 und 2 jeweils als rotationssymmetrische Körper ausgebildet sind. Die Drehachse ist dabei durch eine Strichpunktlinie dargestellt. Der erste Fügepartner 2 weist dabei eine Aussparung 6 auf, wobei der zweite Fügepartner 3 in der Aussparung 6 angeordnet ist. Die Darstellung in Figur 1 zeigt auch einen Formschlussfügebereich 4, wobei der zweite Fügepartner 3 in dem Formschlussfügebereich 4 an dem ersten Fügepartner 2 angeordnet ist. Der zweite Fügepartner 3 ist dabei so an dem ersten Fügepartner 2 und in der Aussparung 6 des ersten Fügepartner 2 angeordnet, dass der zweite Fügepartner 3, nur bedingt durch die Anordnung an und in dem ersten Fügepartner 2, in eine Richtung, dargestellt durch den Pfeil 7, verschiebbar ist.

Der in Figur 1 dargestellte Querschnitt durch die Fügepartneranordnung 1 erstreckt sich auch durch einen Materialüberstand 5. Hierbei ist lediglich einer von mehreren Materialüberständen 5 dargestellt. Der Materialüberstand 5 ist dabei aus dem Material des ersten Fügepartner 2 erzeugt. Der Materialüberstand 5 ist dabei als Erhebung einer, in der Darstellung als gestrichelte Linie dargestellten Oberfläche 8 des ersten Fügepartner 2 dargestellt. Die durch die gestrichelte Linie dargestellte Oberfläche 8, ist dabei die Oberfläche des ersten Fügepartner 2 im Grundzustand vor der Erzeugung der Materialüberstände 5. Der Materialüberstand 5 weist dabei eine zumindest abschnittsweise halbkugelförmige oder als Kugelabschnitt ausgebildete Geometrie, dargestellt durch einen zumindest abschnittsweisen halbrunden Querschnitt.

Der Materialüberstand 5 ist dabei in dem Formschlussfügebereich 4 erzeugt und in diesem, als Teil des ersten Fügepartner 2 angeordnet. Der Materialüberstand 5 ist dabei so erzeugt und angeordnet, dass dieser einen Formschluss zwischen dem zweiten Fügepartner 3 und dem ersten Fügepartner 2 erzeugt. Hierbei ist ein Verschieben des zweiten Fügepartner 3 in Richtung des Pfeils 7 durch den Materialüberstand 5, insbesondere durch weitere nicht dargestellte Materialüberstände 5 verhindert. Die Materialüberstände 5 sind dabei ausschließlich auf dem ersten Fügepartner 2 angeordnet. Die Materialüberstände 5 sind dabei so erzeugt, dass zwischen dem ersten Fügepartner 2 und dem zweiten Fügepartner 3 keine stoffschlüssige Verbindung bzw. materialschlüssige Verbindung ausgebildet wird.

Zur Veranschaulichung wie die Materialüberstände 5 erzeugt wurden oder werden, ist in Figur 1 auch ein beispielhafter Laserstrahl 13 dargestellt. Dieser weist in Strahlenrichtung einen Winkel zur Oberfläche 8 auf. Ein beispielhaftes Verfahren könnte so erfolgen, dass der Laserstrahl 13 auf die Oberfläche 8 des ersten Fügepartners 2 strahlt und der Laser 13 in Ansichtsrichtung oder entgegen der Ansichtsrichtung verfahren wird um auf dem rotationssymmetrischen ersten Fügepartner 2 Schmelzerhebungen zu erzeugen welche sich durch ein Abkühlen des aufgeschmolzenen Materials zu Materialüberständen 5 ausbilden oder ausgebildet werden.

Die Darstellung in Figur 2 zeigt einen Teilausschnitt eines rotationssymmetrischen Fügepartner 2. Hierbei ist der erste Fügepartner 2 aus der Darstellung in Figur 1 dargestellt. Der dargestellte erste Fügepartner 2 weist dabei mehrere Materialüberstände 5 auf, welche umlaufend an dem ersten Fügepartner 2 angeordnet und an diesem, aus dessen Material erzeugt sind. Ferner zeigt die Darstellung in Figur 2 einen Erstreckungsbereich 9 der Materialüberstände 5. Der Erstreckungsbereich 9 bildet dabei einen umlaufenden Abschnitt des ersten Fügepartners 2. Der Erstreckungsbereich 9 ist dabei der Bereich bzw. Abschnitt des ersten Fügepartner 2, welcher durch ein in Figur 2 nicht dargestelltes Laserstrahlverfahren aufgeschmolzen wurde um nicht dargestellte Schmelzerhebungen zu erzeugen, aus denen die dargestellten Materialüberstände 5 gebildet sind. Der Erstreckungsbereich 9 kann dabei als Blindnaht betrachtet werden.

Die in Figur 2 dargestellten Materialüberstände 5 sind dabei in regelmäßigen Abständen zueinander entlang des Erstreckungsbereich 9 erzeugt bzw. angeordnet. Die Materialüberstände 5 sind dabei als, in Umlaufrichtung bzw. entlang des Erstreckungsbereich 9, gestreckte Erhebungen ausgebildet. Mit anderen Worten sind die Materialüberstände 5 als Erhebungen mit zumindest abschnittsweiser ellipsoider oder als Ellipsoidabschnitt ausgebildeter Geometrie ausgebildet.

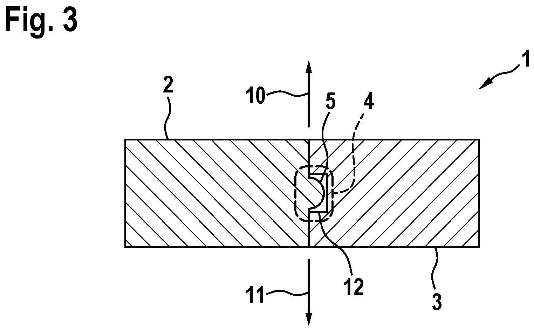

Die Darstellung in Figur 3 zeigt ein weiteres Ausführungsbeispiel einer Fügepartneranordnung 1. Die Fügepartneranordnung 1 ist dabei in einem Querschnitt dargestellt. Hierbei ist ein erster Fügepartner 2 an einem zweiten Fügepartner 3 in einem durch die gestrichelte Linie dargestellten Formschlussfügebereich 4 angeordnet. Die Fügepartner 1 und 2 sind dabei stirnseitig aneinander angeordnet bzw. in einem Stumpfstoß aneinander angeordnet. Der zweite Fügepartner 3 weist dabei eine Nut 12 auf, wobei diese an der Stirnseite des zweiten Fügepartner 3 im Formschlussfügebereich 4 angeordnet ist. Die Darstellung zeigt auch einen Materialüberstand 5 von mehreren Materialüberständen 5, wobei diese in Ansichtsrichtung hinter dem dargestellten Materialüberstand 5 angeordnet sind, wobei nur der dargestellte Materialüberstand 5 sichtbar dargestellt ist und wobei die anderen Materialüberstände wie der dargestellte Materialüberstand 5 ausgebildet sind. Die Materialüberstände 5 sind dabei jeweils als Erhebungen aus der Oberfläche an der Stirnseite des ersten Fügepartner 2 ausgebildet. Die Darstellung zeigt, dass sich die Materialüberstände 5 in Erhebungsrichtung in die Nut 12 erstrecken. Hierbei ist eine Relativbewegung durch Verschieben der beiden Fügepartner 1 und 2 gegeneinander, durch die Materialüberstände 5, welche sich in die Nut 12 erstrecken, in Richtung der Pfeile 10 und 11 verhindert.

Ein beispielhaftes Verfahren zur Herstellung einer solchen Fügepartneranordnung 1 könnte so gestaltet sein, dass wenigstens einer der Fügepartner 1 und 2 während der Erzeugung bzw. Bildung der Materialüberstände 5 entlang der Nut 7 bzw. in eine Richtung quer zu der Richtung der Pfeile 10 und 11 verschoben und/oder gedreht wird, so dass die Materialüberstände 5 in die Nut geschoben werden oder sich in der Nut 7 durch Abkühlen aus erzeugten Schmelzerhebungen bilden.

## Patentansprüche

1. Verfahren zum formschlüssigen Fügen wenigstens zweier, insbesondere nicht stoffschlüssig verbindbarer, Fügepartner (2,3),
wobei die wenigstens zwei Fügepartner (2,3) in einem Formschlussfügebereich (4) aneinander angeordnet werden,
wobei ein Material von einem der Fügepartner (2,3) durch einen Wärmeeintrag mittels eines Laserstrahlverfahrens aufgeschmolzen wird,
**dadurch gekennzeichnet, dass**
durch das Aufschmelzen Schmelzerhebungen aus dem aufgeschmolzenen Material heraus erzeugt werden,
wobei die Schmelzerhebungen nach dem Abkühlen des aufgeschmolzenen Materials als Materialüberstände (5) vorliegen und die Fügepartner (2,3) durch die Materialüberstände (5) in dem Formschlussfügebereich (4) formschlüssig miteinander gefügt werden.

2. Verfahren nach Anspruch 1, **dadurch gekennzeichnet, dass** die Schmelzerhebungen in regelmäßigen Abständen erzeugt werden.

3. Verfahren nach einem der vorhergehenden Ansprüche, **dadurch gekennzeichnet, dass** die Schmelzerhebungen nach Art des Humping-Effekts erzeugt werden.

4. Verfahren nach einem der vorhergehenden Ansprüche, **dadurch gekennzeichnet, dass** sich aus den Schmelzerhebungen Materialüberstände (5) mit jeweils einer zumindest abschnittsweisen als Kugelabschnitt oder Ellipsoidabschnitt ausgebildeten Geometrie bilden.

5. Verfahren nach einem der vorhergehenden Ansprüche, **dadurch gekennzeichnet, dass** wenigstens einer der Fügepartner (2,3) einen Vorsprung aufweist, wobei der andere Fügepartner an dem Vorsprung angeordnet wird.

6. Verfahren nach einem der vorhergehenden Ansprüche, **dadurch gekennzeichnet, dass** wenigstens einer der Fügepartner (2,3) eine Aussparung (6) aufweist, wobei der andere Fügepartner (2,3) in der Aussparung (6) angeordnet wird.

7. Verfahren nach einem der vorhergehenden Ansprüche, **dadurch gekennzeichnet, dass** einer der Fügepartner (2,3) eine Aussparung (6) in dem Formschlussfügebereich (4) aufweist und die Schmelzerhebungen auf dem anderen Fügepartner derart erzeugt werden, dass sich die Materialüberstände (5) in die Aussparung (6) erstrecken.

8. Verfahren nach einem der vorhergehenden Ansprüche, **dadurch gekennzeichnet, dass** die Fügepartner (2,3) zueinander gleichartige Materialien mit zueinander gleichen Schmelzpunkten aufweisen oder aus diesen ausgebildet sind.

9. Verfahren nach einem der vorhergehenden Ansprüche, **dadurch gekennzeichnet, dass** die Fügepartner (2,3) zueinander unterschiedliche Materialien mit zueinander unterschiedlichen Schmelzpunkten aufweisen oder aus diesen ausgebildet sind.

10. Verfahren nach einem der vorhergehenden Ansprüche, **dadurch gekennzeichnet, dass** zumindest das Material im Bereich des Wärmeeintrags, mit einem Schutzgas beaufschlagt wird.

11. Verfahren nach einem der vorhergehenden Ansprüche, **dadurch gekennzeichnet, dass** wenigstens einer der Fügepartner (2,3) während des Wärmeeintrags bewegt, insbesondere gedreht und/oder in eine Vibration versetzt wird.

12. Fügepartneranordnung (1), mit wenigstens zwei Fügepartnern (2,3), die in einem Formschlussfügebereich (4) formschlüssig gefügt sind, **dadurch gekennzeichnet, dass** die Fügepartner (2,3) durch Materialüberstände (5) in Form von Schmelzerhebungen aus erstarrtem Material in dem Formschlussfügebereich (4) formschlüssig miteinander gefügt sind.

13. Fügepartneranordnung (1) nach Anspruch 12, **dadurch gekennzeichnet, dass** die wenigstens zwei Fügepartner (2,3) durch ein Verfahren gemäß einem der Ansprüche 1 bis 11 formschlüssig miteinander gefügt sind.
